# EUROPEAN PATENT APPLICATION

(11) **EP 2 495 967 A1**
(43) Date of publication of application: **05.09.2012**
(21) Application number: 10791513.4
(22) Date of filing: 21.06.2010
(51) Int. Cl.: H04N 7/173

(54) **INTERNET PROTOCOL TELEVISION SYSTEM AND IMPLEMENTATION METHOD FOR RELIEVING BINDING BETWEEN ELECTRONIC PROGRAM GUIDE AND MULTIMEDIA NODE**

(30) Priority: 24.11.2009 CN 200910188420
(71) Applicant: ZTE Corporation, Shenzhen, Guangdong 518057 (CN)
(72) Inventor: LIU, Shizhou, Shenzhen Guangdong 518057 (CN); LI, Rui, Shenzhen Guangdong 518057 (CN)
(74) Representative: Manitz, Finsterwald & Partner GbR
(86) International application number: PCT/CN2010/074170
(87) International publication number: WO 2010/149007

(57) **Abstract**

An implementation method for relieving binding between an Electronic Program Guide (EPG) and a multimedia node in an Internet Protocol Television (IPTV) system is disclosed in present invention, and includes: firstly sending an identity authentication request by a user, and then sending, by the user, a user homepage authentication request after obtaining an identity authentication of a service processing module (3); and obtaining, by the service processing module (3), information of a multimedia node for serving the user via a node allocation module (4) after receiving the user homepage authentication request, wherein the information of the multimedia node is used for assembling a channel Uniform Resource Locator (URL) for use by the user. An IPTV system for relieving binding between an EPG and a multimedia node is also disclosed in the present invention. The solution in the present invention relieves the binding relationship between an EPG and a multimedia node, enables the multimedia node to be dynamically allocated to the EPG when a user logins, and enables the multimedia node to still be used normally when a fault occurs in the EPG, thus improving the utilization rate of the system resource.

## Description

### Field of the Invention

The present invention relates to an Internet Protocol Television (IPTV) technology, especially an IPTV system capable of flexibly allocating a multimedia node, and an implementation method for flexibly allocating the multimedia node in the IPTV system.

### Background of the Invention

An IPTV refers to an IP(Internet Protocol)-based TV broadcasting service which takes a TV set or a personal computer as a display terminal to provide broadband services for users through broadband networks, wherein the broadband services are such as digital broadcasting TV, video services, information services, interactive communities, interactive entertainment, and electronic business etc. An Electronic Program Guide (EPG) is a gateway for a user to access an IPTV system, and the indexing and navigation for all services provided by the IPTV are completed by EPG.

The IPTV, as a new application across the telecommunications industry and the broadcasting and TV industry, has relatively broad market prospects. Currently, with the development of people's demands, the telecommunication industry has entered a broadband era. The broadband gradually begins to enter every aspect of the social life and the IPTV is the best technology which brings video media into telecommunication services on the existing telecommunications broadband networks. An EPG is closely related with a multimedia node in an IPTV system. A user logins on the EPG and video services are provided by the multimedia node which provides streaming media services for the user in the IPTV system.

In the current IPTV systems, the relationship between an EPG and a multimedia node has the following problems: an EPG is bound with a multimedia node, which means that one EPG is corresponding to one multimedia node serving the EPG. During the operation process of an IPTV system, when a fault occurs in an EPG due to various reasons and the EPG cannot be used, the multimedia node corresponding to the EPG fails to provide services such as video services etc. for users even if the multimedia node corresponding to the EPG is normal. Therefore, the multimedia resource in the IPTV system is left unused, thus wasting the system resources.

### Summary of the Invention

In view of this, the one purpose of the present invention is to provide an IPTV system and an implementation method for relieving binding between an EPG and a multimedia node, so as to relieve the binding relationship between the EPG and the multimedia node and enable one of the EPG and the multimedia node to continue to provide services for a user when a fault occurs in the other one of the EPG and the multimedia node, thus improving the utilization rate of the system resource.

To solve the technical problem above, the present application applies the following technical solution:
an implementation method for relieving binding between an EPG and a multimedia node in an IPTV system, comprising: performing following steps by a service processing module (3): authenticating an identity of a user, and after the identity authentication is completed, obtaining information of a multimedia node serving the user via a node allocation module (4) according to a user homepage authentication request sent by a set top box (1).

The step of authenticating an identity of a user by a service processing module (3) comprises:
i. sending an identity authentication request by a user to an EPG (2) via the set top box (1);
ii. performing following steps by the EPG (2): triggering an identity authentication process to the service processing module (3), obtaining an identity code of the user and a domain address of the EPG from the service processing module (3) and delivering downwardly the identity code and the domain address to the set top box (1).

The step of obtaining information of a multimedia node serving the user via a node allocation module (4) according to a user homepage authentication request sent by a set top box (1) comprises:
iii. sending, by the set top box (1), a user homepage authentication request to the EPG (2) according to the domain address of the EPG, and forwarding, by the EPG (2), the user homepage authentication request to the service processing module (3);
iv. after receiving the user homepage authentication request, performing the following steps by the service processing module (3): obtaining information of a multimedia node via the node allocation module (4) and returning the information of the multimedia node to the EPG (2);
v. assembling, by the EPG (2), a channel Uniform Resource Locator (URL) according to the information of the multimedia node received and delivering downwardly the channel URL to the set top box (1);
vi. playing, by the set top box (1), a program of the channel directly on a designated multimedia node according to the channel URL selected by the user.

After obtaining information of a multimedia node serving the user via the node allocation module (4), the method further comprises: storing the information of the multimedia node by the set top box (1) for media redirection;
the method further comprises a media redirection process:
vii. sending, by a user, a multimedia playing request to the EPG (2) via the set top box (1);
viii. performing following steps by the EPG (2): after receiving the multimedia playing request, calling an media redirection module (6), assembling a multimedia URL of a multimedia program on demand of the user according to the information of the multimedia node stored, and returning the multimedia URL to the set top box (1);
ix. playing, by the set top box (1), the multimedia program directly on a designated multimedia node according to the multimedia URL of the multimedia program on demand of the user.

Information required to be authenticated in the identity authentication process comprises: a user name, a user password and a set top box identifier (ID).

An IPTV system for relieving binding of an EPG and a multimedia node, comprising: a set top box (1), an EPG (2), a service processing module (3) and a multimedia node (5), and further comprising: a node allocation module (4),
wherein the service processing module (3) is configured to authenticate an identity of a user, and after the identity authentication is completed, obtain information of a multimedia node serving the user via the node allocation module (4) according to a user homepage authentication request sent by the set top box (1);
the node allocation module (4) is configured to dynamically allocate the multimedia node to the set top box (1).

The set top box (1) is further configured to send an identity authentication request to the EPG (2); the EPG (2) is further configured to, after receiving the identity authentication request from the set top box (1), trigger an identity authentication process to the service processing module (3), obtain an identity code of the user and a domain address of the EPG from the service processing module (3) and deliver downwardly the identity code and the domain address to the set top box (1).

The set top box (1) is further configured to send a user homepage authentication request to the EPG (2) according to the domain address of the EPG; the EPG (2) is further configured to forward the user homepage authentication request received to the service processing module (3); the service processing module (3) is further configured to obtain information of a multimedia node serving the user via a node allocation module (4).

The EPG (2) further includes a media redirection module (6), the set top box (1) is further configured to send a multimedia playing request of the user to the EPG (2) and play a multimedia program directly on a designated multimedia node according to a multimedia URL returned by the EPG (2); the EPG (2) is further configured to call the media redirection module (6), assemble a multimedia URL of a multimedia program on demand of the user according to the information of the multimedia node stored, and return the multimedia URL to the set top box (1).

The EPG (2) and the service processing module (3) are in connection with a database respectively; program information of an IPTV system is stored in the database which is in connection with the EPG (2); the database on the service processing module (3) is taken as a main database and is configured to update the database on the EPG (2).

Compared with the traditional art, the present application has the following beneficial technical effect: the binding relationship between an EPG and a multimedia node is relieved, and the multimedia node is enabled to be freely and dynamically allocated to the EPG when a user logins, so that the resource of the multimedia node can be optimally configured and utilized, and the multimedia node can still be used normally when a fault occurs in the EPG, thus avoiding wasting the system resources. In addition, a fault in the multimedia node does not influence the working of the EPG. Therefore a fault in one of the EPG and the multimedia node will not influence the other one of the EPG and the multimedia node, thus improving the utilization rate of the system resource.

### Brief Description of the Drawings

Fig. 1 is a structural diagram illustrating an IPTV system capable of flexibly allocating a multimedia node in the present invention;
Fig. 2 is a flowchart illustrating an implementation method for flexibly allocating a multimedia node in an IPTV system of the present invention; and
Fig. 3 is a flowchart of a method for requesting multimedia playing by a user in the present invention.

### Detailed Description of the Embodiments

The present invention is further described as below in details according to the accompanying drawings and preferred embodiments.

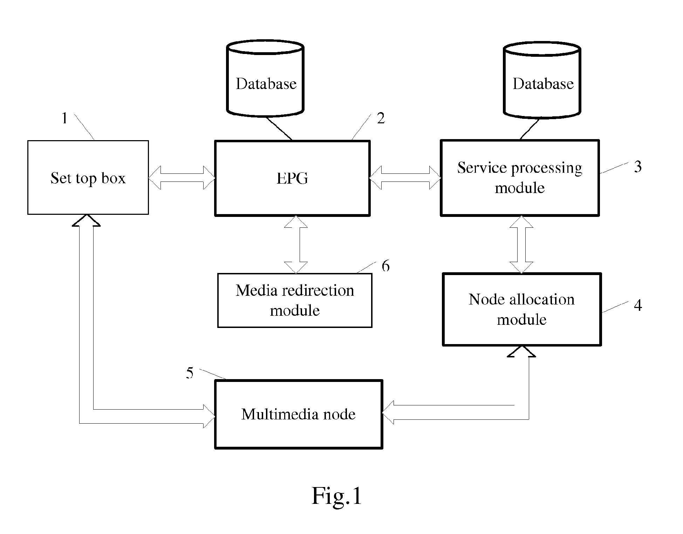

Fig. 1 is a structural diagram illustrating an IPTV system capable of flexibly allocating a multimedia node in the present invention. As shown in Fig. 1, the IPTV system includes a set top box 1, an EPG 2, a service processing module 3, a node allocation module 4, a multimedia node 5 and a media redirection module 6. The set top box 1, the EPG 2, the service processing module 3 and the node allocation module 4 are connected bi-directionally in order. The media redirection module 6 and the EPG 2 are connected bi-directionally. The EPG 2 and the service processing module 3 are connected with a database, respectively. The set top box 1 can obtain information of the multimedia node 5 via the service processing module 3.

The set top box 1 is configured to receive a channel list delivered downwardly by the EPG 2, and plays a channel according to a channel URL (Uniform Resource Locator) in the channel list when a user requests to play the channel, and is further configured to send a video redirection request to the EPG 2 when the user requests an Video on Demand (VOD), and provide video on demand services for the user according to a multimedia URL obtained via redirection.

The EPG 2, which is a portal system of the IPTV system, provides indexing and navigation functions of various services for users. Program information such as videos and TV channels etc. of the IPTV system is stored in the database connected on the EPG 2, and the data of the database connected on the EPG 2 comes from the database on the service processing module 3.

The service processing module 3 is configured to authenticate the identity of a user, and after successful authentication, request information of the multimedia node from the node allocation module 4 and return the information to the EPG 2. An interface for synchronizing data is provided between the service processing module 3 and the EPG 2. The database on the service processing module 3 serves as the main database and is configured to periodically or irregularly perform data synchronization with the database on the EPG 2 to update the database of the EPG 2, thus maintaining the data consistency.

The node allocation module 4 is configured to dynamically allocate the multimedia node to the set top box 1 according to a homepage authentication request sent by the set top box 1.

The multimedia node 5 is configured to provide multimedia services for the user.

The EPG 2 includes a multimedia redirection module 6. The multimedia redirection module 6 assembles a URL of a channel on demand of the user according to the information of the multimedia node in a user session and returns the URL to the set top box.

The EPG 2, the service processing module 3 and the node allocation module 4 are located at the system server and mainly responsible for processing requests sent by the user.

The set top box 1 is further configured to send an identity authentication request to the EPG 2. The EPG 2 is further configured to trigger an identity authentication process to the service processing module 3 after receiving the identity authentication request from the set top box 1, obtain an identity code of the user and a territory address of the EPG from the service processing module 3 and deliver downwardly the identity code and the territory address (domain address) to the set top box 1.

The set top box 1 is further configured to send a user homepage authentication request to the EPG 2 according to the territory address (domain address) of the EPG; the EPG 2 is further configured to forward the received user homepage authentication request to the service processing module 3; the service processing module 3 is further configured to authenticate the identity of the user and obtain information of the multimedia node for serving the user via the node allocation module 4.

The set top box 1 is further configured to send a multimedia playing request of the user to the EPG 2, play a multimedia program directly on a designated multimedia node according to a multimedia URL returned by the EPG 2; the EPG 2 is further configured to call (invoke) the media redirection module 6, assemble a multimedia URL of a multimedia program on demand of the user according to the multimedia node information stored in the corresponding user session, and return the multimedia URL having undergone media redirection to the set top box 1.

According to the implementation method for flexibly allocating a multimedia node in an IPTV system of the present invention, when a user logins on a set top box, the set top box sends an identity authentication request to an EPG, and initiates a user homepage authentication request after the authentication is passed, in order to obtain information of a multimedia node for providing multimedia services for the user. Subsequently, the EPG assembles a channel URL in advance according to the information of the multimedia node, and the set top box plays a program of the channel directly on a designated multimedia node according to the channel URL selected by the user.

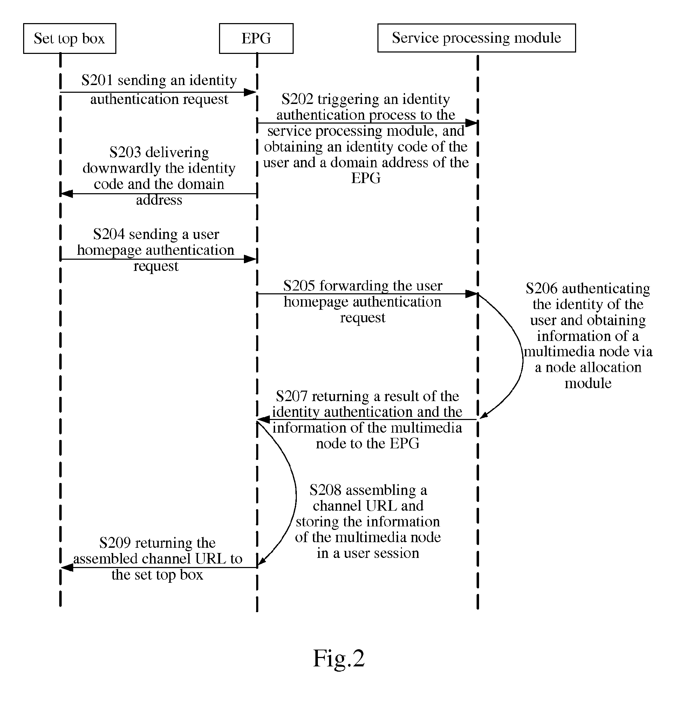

Fig. 2 shows a flowchart illustrating an implementation method for flexibly allocating a multimedia node in an IPTV system of the present invention. In order to facilitate description, only those parts related to the solution of the present invention are shown here. The implementation method includes the following steps:
S201: when a user logins on a set top box, the set top box sends an identity authentication request to an EPG. The identity authentication request includes a set top box ID, a user name and a password of the user.

The identity authentication request aims at obtaining an identity code of the user and a territory address (domain address) of the EPG. The identity code of the user is a unique identity when the user requests a VOD in the IPTV system or requests a service required to be authenticated.

S202: after receiving the identity authentication request from the set top box, the EPG triggers an identity authentication process to the service processing module, and obtains the identity code of the user and the territory address (domain address) of the EPG from the service processing module.

S203: the EPG delivers downwardly the obtained identity code of the user and the obtained territory address of the EPG to the set top box.

S204: the set top box sends a user homepage authentication request to the EPG according to the territory address of the EPG.

S205: after receiving the user homepage authentication request, the EPG forwards the user homepage authentication request to the service processing module.

In the solution of the present invention, because the binding relationship of a multimedia node and an EPG is relieved, information of the multimedia node is required to be obtained dynamically via a user homepage authentication request. In the solution of the present invention, the multimedia node is related to a user, different multimedia nodes may be allocated to different users, thus avoiding influence to other users when a fault occurs in a multimedia node of one certain user.

S206: after receiving the user homepage authentication request, the service processing module firstly authenticates the identity of the user, and then obtains, via the node allocation module, information of the multimedia node configured to provide multimedia services for the user.

In the solution of the present invention, a multimedia node is dynamically managed and allocated by a node allocation module and the binding relationship between the multimedia node and an EPG is cancelled. Therefore the multimedia node will not be left unused as long as it is normal when a fault occurs in the EPG, thus improving the system resource utilization rate. The node allocation module can allocate the multimedia node for a user according to the principle of load balancing.

S207: after the authentication succeeds, the service processing module returns a result of the identity authentication and information of the multimedia node to the EPG.

S208: the EPG assembles a channel URL according to the received information of the multimedia node and simultaneously stores the information of the multimedia node in a user session of the media redirection module to be used for media redirection.

According to the information of the multimedia node providing services for a designated user, wherein the information is returned by the service processing module, the EPG assembles the channel URL according certain rules, e.g. rtsp://node ip: node port number/ etc., and then delivers downwardly the channel URL to the set top box with a designated ID so that the set top box can directly access the corresponding streaming media via the assembled channel URL.

S209: the EPG delivers downwardly the assembled channel URL to the set top box.

Using the steps above, the EPG is able to obtain the multimedia node information returned by the service processing module 3, and further assemble a channel URL according to the information of the multimedia node. When a user makes a channel playing request, a set top box directly provides channel playing services for the user according to the channel URL selected by the user. When the user sends a new playing request of other multimedia such as a VOD etc., the EPG needs to assemble a multimedia URL according to the request of the user. The reason why the VOD-related multimedia URL is not assembled in advance is that an IPTV system may have thousands of videos. The workload to assemble all multimedia URLs in one time is relatively large and the performance may be greatly influenced. In addition, generally, the set top box cannot store these multimedia URLs which are delivered to the set top box in one time. More importantly, generally most videos in the IPTV system will not be clicked to play when a user uses the IPTV system after the user login (one time), and only a small number of videos are selected and played. Therefore, when requested by a user, other multimedia URLs such as videos etc. can be dynamically assembled according to information of multimedia nodes for serving the user.

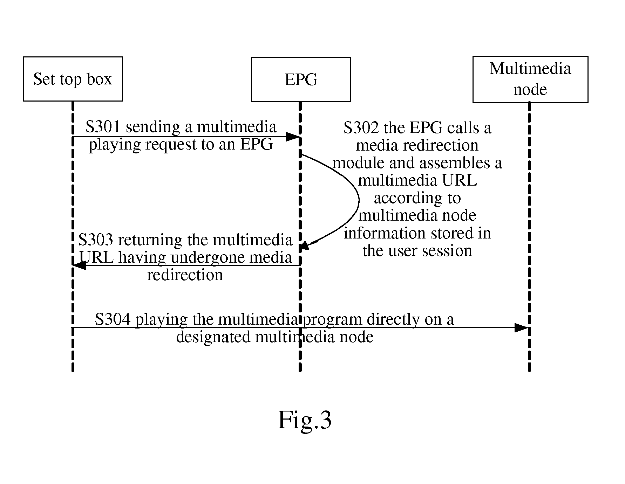

According to Fig. 3, a method for a user to request multimedia playing in the present invention is described below.

S301: a user sends a multimedia playing request to an EPG via a set top box. The multimedia playing request includes an ID of a multimedia program on demand of the user, an ID of the set top box and an identity code of the user.

The identity code of the user is used for verifying whether or not the user is authorized to access the multimedia program on demand. When the user is unauthorized, related prompting information is returned. The ID of the multimedia program on demand of the user is used for being combined with the information of the multimedia node of the multimedia program to assemble the access address multimedia URL of the video.

S302: after receiving the multimedia playing request, the EPG calls (invokes) a media redirection module and assembles the multimedia URL of the multimedia program on demand of the user according to the multimedia node information stored in the corresponding user session.

The multimedia URL is also assembled according to certain rules and is formed by a protocol type, a port number and IP of a multimedia node, and a multimedia program ID. The assembled multimedia URL is delivered downwardly to the set top box so that the set top box can locate the multimedia resource which is able to be utilized.

S303: the EPG returns the multimedia URL having undergone media redirection to the set top box.

S304: the set top box plays the multimedia program directly on a designated multimedia node according to the multimedia URL returned by the EPG.

For the multimedia playing request, the request for VOD multimedia is taken as an embodiment. When a VOD multimedia is played, an interface of the EPG is triggered and the EPG assembles the accessed multimedia URL according to the VOD information requested by the user and the information of the multimedia node in the user session, and returns the multimedia URL to the set top box. The set top box requests the VOD multimedia service according to the multimedia URL.

To sum up, when a user homepage authentication request is performed in the present invention, multimedia node information dynamically allocated can be obtained after the authentication succeeds, and the EPG assembles a multimedia URL of an accessed address so that the user is able to obtain services such as multimedia watching etc. Since there is no binding relationship between the multimedia node and the EPG, and the multimedia node is dynamically allocated when the user logins on a set top box, it only needs to allocate the multimedia node again to another normal EPG when a fault occurs in an EPG, thus avoiding wasting the system resources. In addition, the fault of the multimedia node does not influence the working of the EPG, so a fault of one of the EPG and the multimedia node will not influence the other one of the EPG and the multimedia node, thus improving the system resource utilization rate.

The above is only the preferred embodiment of the present invention and not intended to limit the scope of protection of the present invention, and any modifications, equivalent replacements, improvements and the like within the spirit and principle of the disclosure shall fall within the scope of protection of the present invention.

## Claims

1. An implementation method for relieving binding between an Electronic Program Guide (EPG) and a multimedia node in an Internet Protocol Television (IPTV) system, **characterized by** comprising:
performing following steps by a service processing module (3): authenticating an identity of a user, and after the identity authentication is completed, obtaining information of a multimedia node serving the user via a node allocation module (4) according to a user homepage authentication request sent by a set top box (1).

2. The method according to claim 1, **characterized in that** the step of authenticating an identity of a user by a service processing module (3) comprises:
i. sending an identity authentication request by a user to an EPG (2) via the set top box (1);
ii. performing following steps by the EPG (2): triggering an identity authentication process to the service processing module (3), obtaining an identity code of the user and a domain address of the EPG from the service processing module (3) and delivering downwardly the identity code and the domain address to the set top box (1).

3. The method according to claim 2, **characterized in that** the step of obtaining information of a multimedia node serving the user via a node allocation module (4) according to a user homepage authentication request sent by a set top box (1) comprises:
iii. sending, by the set top box (1), a user homepage authentication request to the EPG (2) according to the domain address of the EPG, and forwarding, by the EPG (2), the user homepage authentication request to the service processing module (3);
iv. after receiving the user homepage authentication request, performing the following steps by the service processing module (3): obtaining information of a multimedia node via the node allocation module (4) and returning the information of the multimedia node to the EPG (2);
v. assembling, by the EPG (2), a channel Uniform Resource Locator (URL) according to the information of the multimedia node received and delivering downwardly the channel URL to the set top box (1);
vi. playing, by the set top box (1), a program of the channel directly on a designated multimedia node according to the channel URL selected by the user.

4. The method according to any one of claims 1 to 3, **characterized in that** after obtaining information of a multimedia node serving the user via the node allocation module (4), the method further comprises: storing the information of the multimedia node by the set top box (1) for media redirection;
the method further comprises a media redirection process:
vii. sending, by a user, a multimedia playing request to the EPG (2) via the set top box (1);
viii. performing following steps by the EPG (2): after receiving the multimedia playing request, calling an media redirection module (6), assembling a multimedia URL of a multimedia program on demand of the user according to the information of the multimedia node stored, and returning the multimedia URL to the set top box (1);
ix. playing, by the set top box (1), the multimedia program directly on a designated multimedia node according to the multimedia URL of the multimedia program on demand of the user.

5. The method according to claim 2 or 3, **characterized in that** information required to be authenticated in the identity authentication process comprises: a user name, a user password and a set top box identifier (ID).

6. An IPTV system for relieving binding of an EPG and a multimedia node, comprising: a set top box (1), an EPG (2), a service processing module (3) and a multimedia node (5), and further **characterized by** comprising: a node allocation module (4),
wherein the service processing module (3) is configured to authenticate an identity of a user, and after the identity authentication is completed, obtain information of a multimedia node serving the user via the node allocation module (4) according to a user homepage authentication request sent by the set top box (1);
the node allocation module (4) is configured to dynamically allocate the multimedia node to the set top box (1).

7. The IPTV system according to claim 6, **characterized in that**
the set top box (1) is further configured to send an identity authentication request to the EPG (2);
the EPG (2) is further configured to, after receiving the identity authentication request from the set top box (1), trigger an identity authentication process to the service processing module (3), obtain an identity code of the user and a domain address of the EPG from the service processing module (3) and deliver downwardly the identity code and the domain address to the set top box (1).

8. The IPTV system according to claim 7, **characterized in that** the set top box (1) is further configured to send a user homepage authentication request to the EPG (2) according to the domain address of the EPG;
the EPG (2) is further configured to forward the user homepage authentication request received to the service processing module (3);
the service processing module (3) is further configured to obtain information of a multimedia node serving the user via a node allocation module (4).

9. The IPTV system according to any one of claims 6 to 8, **characterized in that** the EPG (2) further includes a media redirection module (6),
the set top box (1) is further configured to send a multimedia playing request of the user to the EPG (2) and play a multimedia program directly on a designated multimedia node according to a multimedia URL returned by the EPG (2);
the EPG (2) is further configured to call the media redirection module (6), assemble a multimedia URL of a multimedia program on demand of the user according to the information of the multimedia node stored, and return the multimedia URL to the set top box (1).

10. The IPTV system according to any one of claims 6 to 8, **characterized in that** the EPG (2) and the service processing module (3) are in connection with a database respectively;
program information of an IPTV system is stored in the database which is in connection with the EPG (2);
the database on the service processing module (3) is taken as a main database and is configured to update the database on the EPG (2).
